(19) Europäisches Patentamt
European Patent Office
Office européen des brevets

(11) **EP 4 556 265 A1**

(12) **EUROPEAN PATENT APPLICATION**
published in accordance with Art. 153(4) EPC

(43) Date of publication:
**21.05.2025 Bulletin 2025/21**

(51) International Patent Classification (IPC):
**B60G 11/28** (2006.01)    **B60G 11/27** (2006.01)
**B60G 15/08** (2006.01)

(21) Application number: **24790089.7**

(22) Date of filing: **16.08.2024**

(86) International application number:
**PCT/CN2024/112771**

(87) International publication number:
**WO 2025/066660 (03.04.2025 Gazette 2025/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 28.09.2023  CN 202311273643
10.11.2023  CN 202323063501 U
10.11.2023  CN 202311500161
10.11.2023  CN 202311499658
10.11.2023  CN 202311501852
10.11.2023  CN 202323054770 U

(71) Applicants:
• **Zhejiang Geely Holding Group Co., Ltd.**
**Hangzhou, Zhejiang 310051 (CN)**

• **Zhejiang LEVC New Energy Automotive Co., Ltd.**
**Hangzhou, Zhejiang 311217 (CN)**
• **Zhejiang  LEVC R & D Co., Ltd.**
**Ningbo, Zhejiang 315336 (CN)**

(72) Inventors:
• **WANG, Wenguang**
**Hangzhou, Zhejiang 310051 (CN)**
• **SUN, Yongqian**
**Hangzhou, Zhejiang 310051 (CN)**
• **ZHANG, Yuyi**
**Hangzhou, Zhejiang 310051 (CN)**

(74) Representative: **Dai, Simin**
**Reyda IP**
**A073**
**157, Quai du Président Roosevelt**
**92130 Issy-les-Moulineaux (FR)**

(54) **MACPHERSON AIR SPRING STRUT ASSEMBLY AND VEHICLE**

(57)    The present application provides a MacPherson air spring strut assembly and a vehicle. The MacPherson air spring strut assembly includes a spring body, a mounting component, and a damper rod component, where the mounting component includes a rotating component and a mounting plate disposed around the rotating component, the mounting plate is fixedly connected to a vehicle body, and the spring body, the damper rod component, and the rotating component are rotatable relative to the mounting plate. The MacPherson air spring strut assembly and the vehicle according to the present application have a simple structure and high stability.

FIG. 2

Processed by Luminess, 75001 PARIS (FR)

EP 4 556 265 A1

# Description

## TECHNICAL FIELD

This invention relates to the field of vehicle technology, and in particular to a MacPherson air spring strut assembly and a vehicle.

## BACKGROUND

**With** the increasing demand for vehicles, the requirements for ride and handling of the vehicles are getting higher and higher. MacPherson air springs have been widely used in the field of vehicle technology. A MacPherson air spring uses high pressure, compressibility, and releasability of sealed air to achieve static load-bearing and dynamic rebound, and has the function of shock mitigation and vibration reduction, realizing consistency in the natural frequency of the vehicle body and improving ride comfort. Meanwhile, the MacPherson air spring also needs to perform the steering function during vehicle operation by rotating relative to body parts when the vehicle turns. Therefore, the rotational connection between the MacPherson air spring and the vehicle body has become a difficulty in the art. Therefore, it is necessary to provide an improved MacPherson air spring strut assembly and vehicle to solve the above problems.

## SUMMARY

**The** present application provides a MacPherson air spring strut assembly and a vehicle, which have a simple structure and strong stability.

**The** present application discloses a MacPherson air spring strut assembly, including a spring body, a mounting component, and a damper rod component, where the mounting component includes a rotating component and a mounting plate disposed around the rotating component, the mounting plate is fixedly connected to a vehicle body, and the spring body, the damper rod component, and the rotating component are rotatable relative to the mounting plate.

Further, the rotating component includes a lower mounting seat and an upper mounting seat, where the upper mounting seat is disposed on an outer side of the lower mounting seat and is in threaded connection with the lower mounting seat.

Further, the upper mounting seat is provided with a plurality of through holes, the lower mounting seat is provided with a plurality of positioning holes, and a positioning jackscrew passes through one of the through holes and is inserted into a corresponding positioning hole for rotational positioning between the upper mounting seat and the lower mounting seat.

Further, a circle formed by centers of all the positioning holes and a circle formed by centers of all the through holes are concentric circles, and have a same radius. An angle formed by centers of adjacent two of the through holes to a center of the concentric circles is $\alpha$, and an angle formed by centers of adjacent two of the positioning holes to the center of the concentric circles is $\beta$, where a relationship between $\alpha$ and $\beta$ is: $\alpha \neq \beta$.

Further, the upper mounting seat is disposed above the mounting plate, an upper bearing component is disposed between the upper mounting seat and the mounting plate, and a lower bearing component is disposed between the lower mounting seat and the mounting plate.

Further, the lower bearing component includes a third race fixed to the mounting plate, a fourth race fixed to the lower mounting seat, and a second sliding ring disposed between the third race and the fourth race, where the third race and the fourth race have L-shape longitudinal cross-sections, and the second sliding ring is disposed radially.

**Further,** the lower mounting seat includes a lower stop portion which protrudes outward radially, an upper seat is disposed on an upper portion of the spring body, an upper end of the lower stop portion is in sliding fit with the lower bearing component, and a lower end of the lower stop portion abuts against the upper seat.

Further, the rotating component further includes a sealing cover, which is fixed to the lower mounting seat through the upper mounting seat.

Further, a third sealing member is disposed between the sealing cover and the lower mounting seat; the upper mounting seat includes an annular pressing portion disposed above the lower mounting seat and the sealing cover, and a connecting portion with a height lower than that of the pressing portion; and the connecting portion is in sliding fit with the upper bearing component.

Further, the upper mounting seat further includes an outer stop portion, an internal thread is provided on one end of the connecting portion, and the outer stop portion is disposed on a side of the other end of the connecting portion; the lower mounting seat includes a main mounting ring and a lower stop portion, an external thread is provided on an upper end of an outer wall of the main mounting ring and is matched with the internal thread, a lower end of the main mounting ring is connected to an air spring component, and the lower stop portion is disposed on an outer wall in the middle of the main mounting ring; and the main mounting ring, the lower stop portion, the connecting portion, and the outer stop portion together define a mounting groove, and the mounting plate passes between the lower stop portion and the outer stop portion and is inserted into the mounting groove.

Further, the upper mounting seat further includes a reinforcing rib, where one end of the reinforcing rib is connected to an outer side of the pressing portion, and the other end of the reinforcing rib is connected to an outer side of the connecting portion.

Further, the damper rod component includes a piston rod, an upper end of the piston rod being fixed inside the lower mounting seat through a rubber bushing; and an abutting portion is provided on a bottom of the sealing cover and extends longitudinally, the abutting portion abutsting against the rubber bushing.

Further, the mounting plate is mounted between the upper mounting seat and the lower mounting seat, and the upper mounting seat and the lower mounting seat are rotatable relative to the mounting plate; and a height of a top end of the mounting plate is lower than that of a top end of the lower mounting seat.

Further, the spring body includes a lower seat connected to the damper rod component, and the lower seat is disposed at an angle with respect to the damper rod component.

Further, the spring body includes an upper seat, a sleeve, and a dust shield outside of the sleeve, where the upper seat includes a support body and an end plate extending outward radially from the support body; and a fourth sealing member is disposed between the support body and the lower mounting seat, and the end plate is connected to the dust shield.

Further, the MacPherson air spring strut assembly further includes an auxiliary air chamber assembly, where the auxiliary air chamber assembly is fixed to an upper portion of the mounting component and is communicated with the spring body through the mounting component; and the mounting component is in sealed connection with both the spring body and the auxiliary air chamber assembly.

Further, a main air chamber is formed inside the spring body, an auxiliary air chamber is formed inside the auxiliary air chamber assembly, and the main air chamber can be communicated with the auxiliary air chamber.

Further, the mounting component further includes a sealing cover fixed to the auxiliary air chamber assembly, and an air channel is formed between the sealing cover and the auxiliary air chamber assembly; and the sealing cover is fixed to the auxiliary air chamber assembly through snap-fit connection or a mounting bolt.

Further, a first sealing member and a second sealing member are disposed between the sealing cover and the auxiliary air chamber assembly, and the first sealing member and the second sealing member are located on both sides of the air channel, respectively.

Further, a communicating cavity is formed in the sealing cover and is communicated with the spring body; and a plurality of first vent holes are provided on a side of the auxiliary air chamber close to the sealing cover, a plurality of second vent holes are provided on a side of the communicating cavity close to the auxiliary air chamber assembly, and the second vent holes are communicated with the first vent holes.

Further, an annular transition cavity is formed between the sealing cover and the auxiliary air chamber assembly, and is communicated with the first vent holes and the second vent holes; and the sealing cover includes a first sealing portion and a second sealing portion which extend from top to bottom, a side surface of the first sealing portion forms a first sealing surface, a top surface of the second sealing portion forms a second step surface, and the first sealing surface, the second step surface and the auxiliary air chamber assembly together define the transition cavity.

Further, the sealing cover includes a third sealing portion extending into the lower mounting seat, and a third sealing member is disposed between the third sealing portion and the lower mounting seat; a bottom of the auxiliary air chamber assembly is disposed close to a top of the upper mounting seat; the upper mounting seat is pressed against the third sealing portion; and a limiting member is disposed between the lower mounting seat and the sealing cover, to limit a relative rotation between the lower mounting seat and the sealing cover.

Further, the MacPherson air spring strut assembly further includes a solenoid valve, where the solenoid valve is disposed inside the auxiliary air chamber assembly to control connection and disconnection between the main air chamber and the auxiliary air chamber.

Further, a central axis of the mounting component coincides with a central axis of the damper rod component, and a central axis of the spring body is disposed at an angle with respect to the central axis of the damper rod component.

**The** present application further discloses a vehicle including the MacPherson air spring strut assembly as described above.

The MacPherson air spring strut assembly and the vehicle according to the present application are provided with the rotating component, and the mounting plate fixedly connected with the vehicle body, and the mounting plate rotates relative to the spring body, the damper rod component and the rotating component, such that the MacPherson air spring strut assembly can rotate relative to the vehicle body when the vehicle turns. The MacPherson air spring strut assembly according to the present application is simple in relative rotation structure and reliable in connection. Meanwhile, since the mounting plate does not have a direct connection with the main air chamber in the spring body, there is no need to consider the problem of air tightness, which effectively reduces the difficulty in design and manufacturing.

It is to be understood that the foregoing general description and the following detailed description are exemplary and explanatory only, and are not intended to limit the present application.

## BRIEF DESCRIPTION OF DRAWINGS

**The** accompanying drawings herein, which are incorporated into and constitute a part of this specification, illustrate embodiments consistent with the present application and, together with the specification, serve to explain the principles of the present application.

FIG. 1 is a perspective view of a MacPherson air spring strut assembly according to a first embodiment of the present application.

FIG. 2 is a cross-sectional view of the MacPherson air spring strut assembly in FIG. 1.

FIG. 3 is a partial enlarged view of portion A in FIG. 2.

FIG. 4 is a partial enlarged view of an upper portion of the MacPherson air spring strut assembly in FIG. 2.

FIG. 5 is a partial enlarged view of an auxiliary air chamber assembly and a mounting component in FIG. 2.

FIG. 6 is a cross-sectional view of an upper mounting seat of a mounting component according to the present application.

FIG. 7 is a top view of an upper mounting seat of a mounting component according to the present application.

FIG. 8 is a cross-sectional view of a lower mounting seat of a mounting component according to the present application.

FIG. 9 is a top view of a lower mounting seat of a mounting component according to the present application.

FIG. 10 is a schematic diagram of assembly of an upper mounting seat and a lower mounting seat of a mounting component according to the present application.

FIG. 11 is a partial enlarged view of portion B in FIG. 2.

FIG. 12 is a partial enlarged view of portion C in FIG. 2.

FIG. 13 is a perspective view of a MacPherson air spring strut assembly according to a second embodiment of the present application.

FIG. 14 is a cross-sectional view of the MacPherson air spring strut assembly in FIG. 13.

FIG. 15 is a partial enlarged view of FIG. 14.

Description of reference numerals

100 - spring body; 110 - main air chamber; 120 - upper seat; 121 - support body; 122 - end plate; 123 - first retaining portion; 124 - first retaining ring; 125 - push ring; 130 - lower seat; 131 - receiving hole; 132 - second retaining portion; 133 - second retaining ring; 140 - sleeve; 150 - dust shield;

200 - mounting component; 210 - lower mounting seat; 211 - lower stop portion; 212 - upper connecting portion; 213 - lower connecting portion; 2131 - fourth sealing member; 214 - positioning hole; 215 - main mounting ring; 220 - sealing cover; 220' - sealing cover; 221 - communicating cavity; 221' - communicating cavity; 222 - first sealing portion; 2221 - first sealing member; 2222 - first step surface; 2223 - first sealing surface; 2224 - mounting bolt; 223 - second sealing portion; 2231 - second sealing member; 2232 - second step surface; 2233 - second sealing surface; 2234 - second vent hole; 2235 - limiting block; 224 - third sealing portion; 2241 - third sealing member; 2241' - third sealing member; 2242 - third step surface; 2242' - third step surface; 2243 - third sealing surface; 2243' - third sealing surface; 225 - abutting portion; 225' - abutting portion; 230 - upper mounting seat; 231 - pressing portion; 2311 - positioning jackscrew; 232 - connecting portion; 2321 - outer stop portion; 233 - reinforcing rib; 234 - through hole; 240 - mounting plate; 241 - clamping portion; 242 - bending portion; 243 - first limiting portion; 244 - second limiting portion; 245 - protruding portion; 2451 - lug; 246 - second fastener; 247 - first annular groove; 248 - second annular groove; 250 - upper bearing component; 251 - first race; 252 - second race; 253 - first sliding ring; 254 - first buffer member; 260 - lower bearing component; 261 - third race; 262 - fourth race; 263 - second sliding ring; 264 - second buffer member; 270 - mounting groove;

300 - damper rod component; 310 - piston rod; 311 - fourth fastener; 312 - fifth sealing member; 313 - sealing gasket; 320 - oil storage cylinder; 330 - rubber bushing; 340 - buffer block; 350 - damper sealing cover;

400 - auxiliary air chamber assembly; 410 - auxiliary air chamber; 420 - inner wall; 421 - accommodating space; 430 - outer wall; 440 - supporting wall; 450 - connecting wall; 460 - solenoid valve; 470 - first vent hole; 480 - transition cavity;

500 - longitudinal axis.

**DETAILED DESCRIPTION**

Reference will now be made in detail to exemplary embodiments, examples of which are illustrated in the accompanying drawings. When the following description refers to the drawings, the same numerals in different drawings indicate the same or similar elements, unless otherwise indicated. Embodiments described in the following exemplary embodiments are not intended to be representative of all embodiments consistent with the present application. Rather, they are merely examples of apparatuses and methods consistent with some aspects of the present application as detailed in the appended claims.

Terminology used herein is for the purpose of describing particular embodiments only, and is not intended to be limiting of this specification. Unless otherwise defined, technical or scientific terms used herein shall have their ordinary meanings as understood by a person of ordinary skill in the art to which the present application pertains. Terms "first," "second," and the like as used in this specification and in the claims do not imply any order, quantity, or importance, but are merely used to distinguish one component from another. Similarly, terms "a" or "an" and the like do not denote a limitation on quantity, but rather denote the presence of at least one. "A plurality of" or "several" means two or more. Unless otherwise indicated, terms "front," "rear," "lower," and/or "upper" and the like are for convenience of description only, and are not limited to a position or a spatial orientation. Terms "including" or "comprising" and the like are intended to mean that elements or items appearing before "including" or "comprising" encompass elements or items listed after "including" or "comprising" and equivalents thereof, without excluding other elements or items. Terms "connected" or "coupled" and the like are not limited to physical or mechanical connections, but may include electrical connections, whether direct or indirect.

Terminology used herein is for the purpose of describing particular embodiments only, and is not intended to be limiting of this specification. As used in this specification and the appended claims, the singular forms of "a," "an," "the," and "said" are intended to include plural forms as well, unless the context clearly dictates otherwise. It should also be understood that the term "and/or" as used herein refers to and includes any or all possible combinations of one or more of the associated listed items.

Hereinafter, embodiments of the present application will be described in detail.

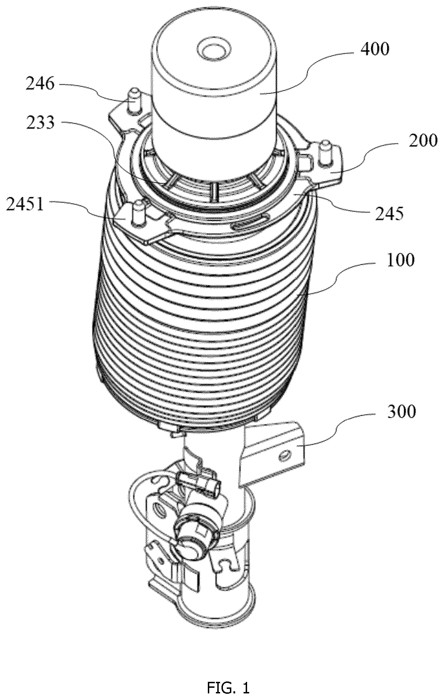

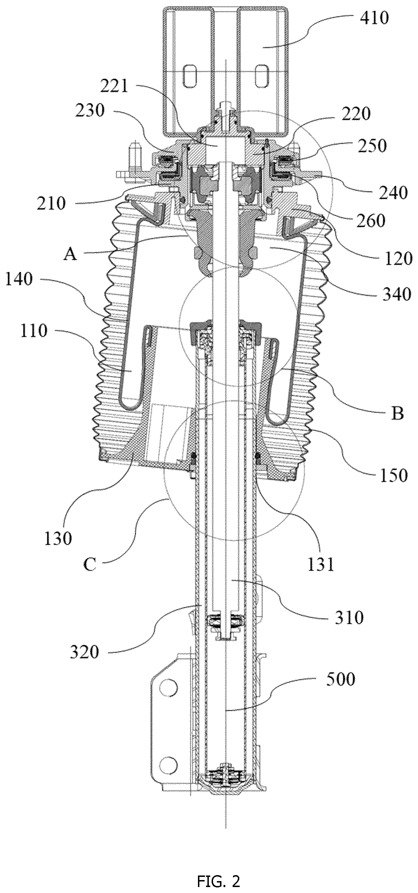

**As** shown in FIGS. 1 and 2, the present application provides a MacPherson air spring strut assembly, including a spring body 100, a mounting component 200, a damper rod component 300, and an auxiliary air chamber assembly 400.

**The** mounting component 200 is disposed above the spring body 100, and the damper rod component 300 is disposed below the spring body 100. The auxiliary air chamber assembly 400 is disposed above the mounting component 200 and is communicated with the spring body 100 through the mounting component 200. The mounting component 200 is in sealed connection with both the spring body 100 and the auxiliary air chamber assembly 400. The mounting component 200 is fixedly connected to a body of a vehicle, and a lower end of the damper rod component 300 is fixedly connected to a steering knuckle of the vehicle. A main air chamber 110 is formed inside the spring body 100, and an auxiliary air chamber 410 is formed inside the auxiliary air chamber assembly 400. The auxiliary air chamber 410 may be in selective communication with the main air chamber 110.

**The** MacPherson air spring strut assembly according to the present application has a longitudinal axis 500. Central axes of the mounting component 200, the damper rod component 300, and the auxiliary air chamber assembly 400 all coincide with the longitudinal axis 500. A central axis of the spring body 100 is disposed at an angle with respect to the longitudinal axis 500.

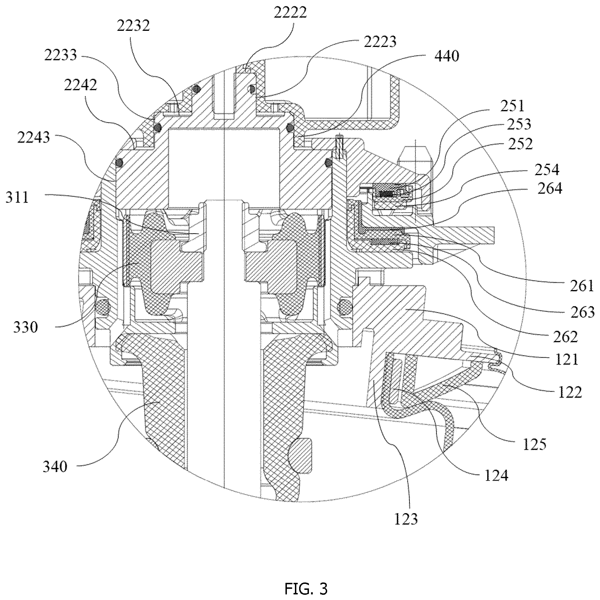

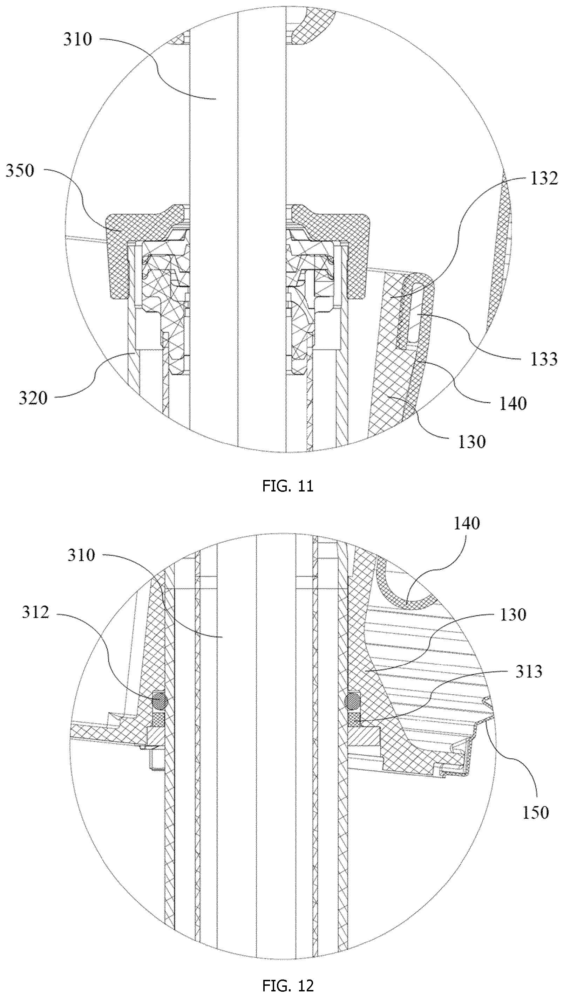

Referring further to FIG. 2, FIG. 3, FIG. 11 and FIG. 12, the spring body 100 includes an upper seat 120, a lower seat 130, a sleeve 140, and a dust shield 150. The upper seat 120 is disposed on an upper portion of the spring body 100, and is fixedly connected to the mounting component 200. The lower seat 130 is disposed on a lower portion of the spring body 100, and is fixedly connected to the damper rod component 300. An upper end of the sleeve 140 is in sealed connection with the upper seat 120 and a lower end of the sleeve 140 is in sealed connection with the lower seat 130, so as to form the main air chamber 110. The dust shield 150 is disposed outside of the sleeve 140.

The upper seat 120 includes a support body 121, an end plate 122, a first retaining portion 123, a first retaining ring 124, and a push ring 125. The support body 121 is fixed to the mounting component 200, and a fourth sealing member 2131 is disposed between the support body 121 and the mounting component 200. The end plate 122 extends radially from an outer end of the support body 121, and an outer side of the end plate 122 is in sealed connection with the dust shield 150.

The first retaining portion 123 extends longitudinally from a bottom of the support body 121. A serrated groove is disposed on an outer side of the first retaining portion 123, and one end of the sleeve 140 is disposed outside of the serrated groove and overlaps with the serrated groove. It is to be understood that "outside" in the present application refers to a side away from the longitudinal axis 500. The first retaining ring 124 is disposed around an outer side of the sleeve 140 to press the one end of the sleeve 140 against the outside of the first retaining portion 123, enabling sealed connection between the sleeve 140 and the upper seat 120. The push ring 125 is disposed on a bottom of the end plate 122 and located outside of the first retaining portion 123. The sleeve 140, after inflated, abuts against the push ring 125 and folds over.

The push ring 125 includes an inner ring and an outer ring, with one end of the inner ring being connected to one end of the outer ring, such that a sharp corner is formed in a vertical cross-section of the push ring 125, where the sharp corner is inserted in a bending of the sleeve 140. The outer ring abuts against a portion of the bent sleeve 140 to support the sleeve 140. A second bending of the sleeve 140 is performed on the outer ring, and can be performed at any position on the outer ring according to the forces on the sleeve 140. In order to avoid damage to the sleeve 140 from the sharp corner, the sharp corner is rounded.

The push ring 125 functions to support the sleeve 140. Under the action of the push ring 125, the sleeve 140 is bent to form an S-shape at the bend, making it easier and more convenient to offset the forces on the sleeve 140. The push ring 125 is fixedly connected to the upper seat 120 through welding, interference fit, snap-fit connection, or the like.

A second retaining portion 132 and a second retaining ring 133 are disposed on an upper portion of the lower seat 130. A serrated groove is disposed on an outer side of the second retaining portion 132, and the other end of the sleeve 140 is disposed outside of the serrated groove and overlaps with the serrated groove. The second retaining ring 133 is disposed around the sleeve 140 to press the other end of the sleeve 140 against the outside of the second retaining portion 132, enabling sealed connection between the sleeve 140 and the lower seat 130.

**The** upper seat 120 functions to support the sleeve 140 and the dust shield 150 and to transmit the forces on the sleeve 140. The sleeve 140 rolls on the lower seat 130 and acts to change the characteristics of the air spring during movement. The first retaining ring 124 and the second retaining ring 133 act as a seal between the sleeve 140 and the upper seat 120, and between the sleeve 140 and the lower seat 130, respectively. The lower seat 130 is connected to an oil storage cylinder 320, and functions to support the main body of the air spring, and to change the characteristics of the air spring by changing the shape of the contact between the lower seat 130 and the sleeve 140.

**The** lower seat 130 is disposed at an angle with respect to the damper rod component 300. In particular, a receiving hole 131 is eccentrically disposed in the lower seat 130, and a central axis of the receiving hole 131 is offset from a central axis of the lower seat 130, i.e., the central axis of the receiving hole 131 is disposed at an angle with respect to the central axis of the lower seat 130. The receiving hole 131 is used for receiving the damper rod component 300, and the central axis of the receiving hole 131 is located on the longitudinal axis 500 after assembly. Thus, the central axis of the lower seat 130 is also inclined with respect to the longitudinal axis 500, which in turn makes the lower portion of the spring body 100 offset from the longitudinal axis 500. Moreover, the lower seat 130 is inclined at an angle with respect to the damper rod component 300 such that the central axis of the spring body 100 does not coincide with a central axis of the damper rod component 300 (i.e., the longitudinal axis 500). As such, the MacPherson air spring assembly can provide a certain amount of lateral force to meet the demand of the damper rod component 300 for the lateral force, providing protection for the damper rod component 300 so as to avoid premature damage to the damper rod component 300.

During movement of the vehicle, the sleeve 140 moves on the lower seat 130 along the longitudinal axis 500 for bouncing of the vehicle. The fold over of the sleeve 140 on both upper and lower sides can improve the connection strength and connection stability between the sleeve 140 and the upper seat 120, and increase the elasticity and deformation capability of the spring body 100, which is conducive to improving the buffer effect, shock-absorption capability, and disturbance resistance of the MacPherson air spring strut assembly. Meanwhile, the stress and damage to the spring body 100 can be reduced, thereby prolonging its service life.

In particular, in this embodiment, when the sleeve 140 is subjected to a tensile force, the force between the sleeve 140 and the upper seat 120 can be reduced by decreasing the bending. When the sleeve 140 is subjected to a squeezing force, the force between the sleeve 140 and the upper seat 120 can be reduced by increasing the bending. In other words, both the squeezing force and the tensile force are offset to a certain extent by the change of the bending, such that the force is prevented from acting on the connection between the sleeve 140 and the upper seat 120, thereby improving the connection strength and connection stability between the sleeve 140 and the upper seat 120.

The dust shield 150 is a bellows, with one end connected or snap-fitted to the outer side of the end plate 122, and the other end connected or snap-fitted to a bottom of the lower seat 130. The dust shield 150 can be extended or contracted along with the up-and-down movement of the lower seat 130, and can prevent impurities or foreign matters from entering the lower seat 130, avoiding damage to the sleeve 140 due to external wear and tear.

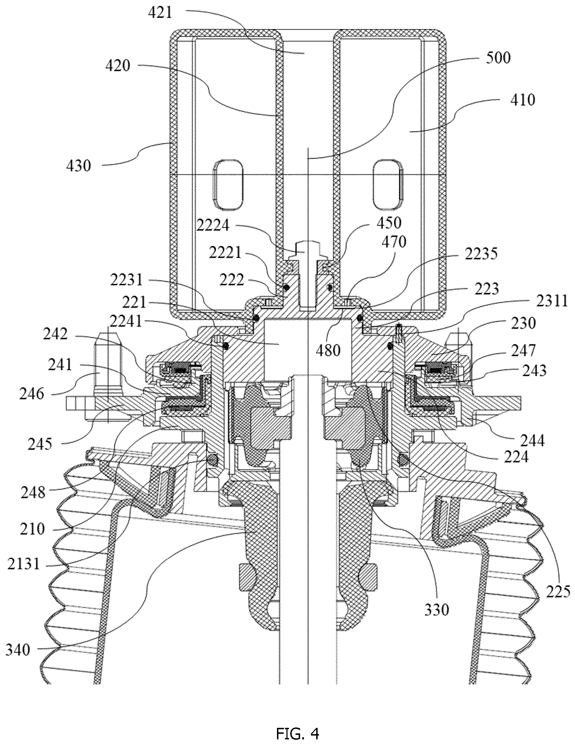

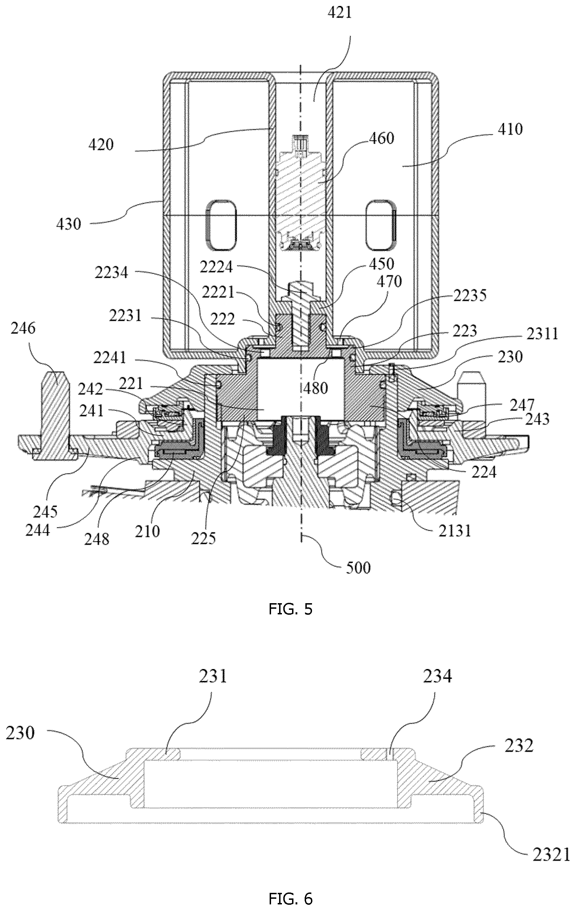

Referring further to FIG. 4 and FIG. 5, the mounting component 200 is disposed above the spring body 100. The mounting component 200 includes a rotating component and a mounting plate 240 disposed around the rotating component. The rotating component includes a lower mounting seat 210, a sealing cover 220, an upper mounting seat 230, and a mounting plate 240. The mounting plate 240 is fixedly connected to the vehicle body, and the spring body 100, the damper rod component 300, and the rotating component are rotatable relative to the mounting plate 240.

A lower end of the lower mounting seat 210 is fixedly connected to the spring body 100, and an upper end of the lower mounting seat 210 is fixedly connected to the upper mounting seat 230. The sealing cover 220 is fixed to the lower mounting seat 210 through the upper mounting seat 230. The mounting plate 240 is disposed around an outer side of the lower mounting seat 210 and is connected to the vehicle body to fix the MacPherson air spring strut assembly to the vehicle body. An upper bearing component 250 is disposed between the upper mounting seat 230 and the mounting plate 240, and a lower bearing component 260 is disposed between the mounting plate 240 and the lower mounting seat 210.

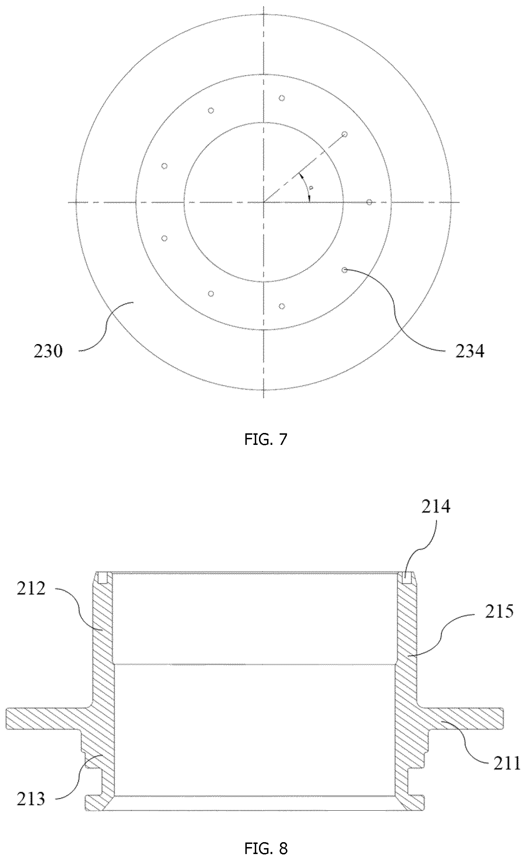

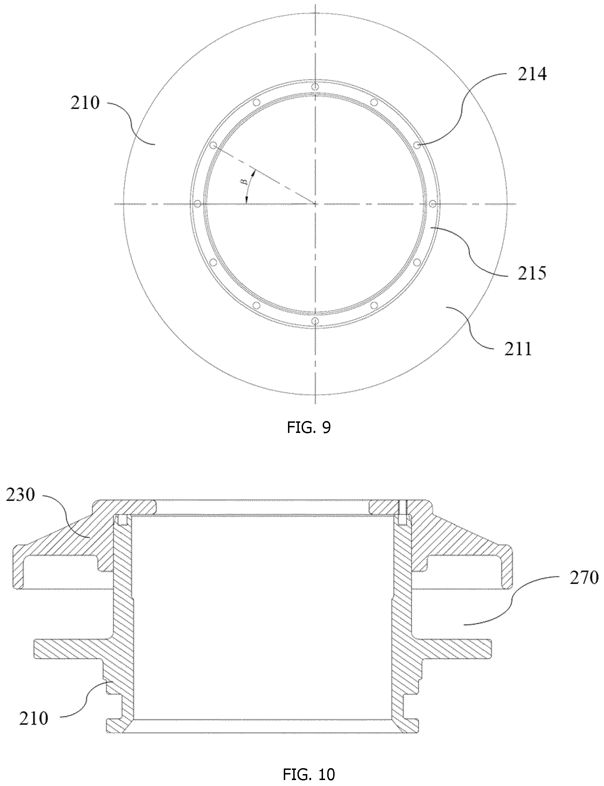

Referring further to FIG. 8 and FIG. 9, the lower mounting seat 210 includes a lower stop portion 211 which radially protrudes outwardly and a main mounting ring 215. The lower stop portion 211 is disposed on an outer wall in the middle of the main mounting ring 215. The main mounting ring 215 includes an upper connecting portion 212 extending upwardly from an inner side of the lower stop portion 211 and a lower connecting portion 213 extending downwardly from the inner side of the lower stop portion 211. An upper end of the lower stop portion 211 is in sliding fit with the lower bearing component 260, and a lower end of the lower stop portion 211 is in contact with the upper seat 120. The upper connecting portion 212 is disposed around an outer side of the sealing cover 220 and is further fixed to the sealing cover 220 by being fixed to the upper mounting seat 230. The lower connecting portion 213 is fixed to the spring body 100.

The fourth sealing member 2131 is disposed between the lower mounting seat 210 and the upper seat 120 to isolate the main air chamber 110 from the outside. In particular, the lower connecting portion 213 is provided with an annular groove, in which the fourth sealing member 2131 is located. During assembly, the lower mounting seat 210 is inserted into an inner cavity of the upper seat 120, and the fourth sealing member 2131 is located between the lower connecting portion 213 and the support body 121, so as to enable sealing between the mounting component 200 and the spring body 100. Meanwhile, a limiting device is disposed between the lower mounting seat 210 and the upper seat 120 to prevent relative rotation between the lower mounting seat 210 and the upper seat 120. The fourth sealing member 2131 is substantially a static seal.

A communicating cavity 221 is formed inside the sealing cover 220, and the auxiliary air chamber 410 is communicated with the main air chamber 110 through the communicating cavity 221. An air channel is formed between the sealing cover 220 and the auxiliary air chamber assembly 400. A first sealing member 2221 and a second sealing member 2231 are respectively located on both sides of the air channel to ensure the sealing between the auxiliary air chamber 410 and the communicating cavity 221.

The sealing cover 220 includes a first sealing portion 222, a second sealing portion 223, and a third sealing portion 224 sequentially extending from top to bottom. The first sealing portion 222 protrudes into the auxiliary air chamber assembly 400, and includes a first step surface 2222 disposed transversely and a first sealing surface 2223 extending downwardly from the first step surface 2222. The first sealing surface 2223 is provided with an annular groove and is attached to an inner wall 420. The first sealing member 2221 is disposed in the annular groove between the first sealing surface 2223 and the inner wall 420.

The second sealing portion 223 is connected to a lower end of the first sealing portion 222. The second sealing portion 223 includes a second step surface 2232 radially extending from the first sealing surface 2223 and a second sealing surface 2233 downwardly extending from the second step surface 2232. The air channel passes through the second step surface 2232. The second sealing surface 2233 is provided with an annular groove and is attached to a supporting wall 440 of the auxiliary air chamber assembly 400. The second sealing member 2231 is disposed in the annular groove between the second sealing surface 2233 and the supporting wall 440.

The third sealing portion 224 extends into the lower mounting seat 210 from a lower end of the second sealing portion 223. The third sealing portion 224 includes a third step surface 2242 radially extending from the second sealing surface 2233 and a third sealing surface 2243 downwardly extending from the third step surface 2242. The upper mounting seat 230 is pressed against the third sealing portion 224, and the third step surface 2242 is located below a pressing portion 231 of the upper mounting seat 230, such that the sealing cover 220 is fixed to the lower mounting seat 210 under the pressing action of the upper mounting seat 230. The third sealing surface 2243 is provided with an annular groove and is attached to the upper connecting portion 212. The third sealing member 2241 is disposed in the annular groove between the third sealing surface 2243 and the upper connecting portion 212. A lower end of the third sealing portion 224 abuts against a rubber bushing 330 to restrict deformation of the rubber bushing 330. The third sealing member 2241 is substantially a static seal.

In this embodiment, the first sealing member 2221, the second sealing member 2231, and the third sealing member 2241 are each disposed on a side of the longitudinally extending sealing surface of the sealing cover 220. The three sealing members are in interference fit with the sealing cover 220, the auxiliary air chamber assembly 400, and the lower mounting seat 210 in a circumferential direction. On the one hand, the sealing of the sealing cover 220 with the auxiliary air chamber assembly 400 and the lower mounting seat 210 is enabled, which ensures that air chambers inside the MacPherson air spring strut assembly are isolated from the outside, and prevents liquids, gases, or other substances from leaking from the connections or penetrating into. On the other hand, the longitudinal relative displacement between the sealing cover 220 and the auxiliary air chamber assembly 400, and between the sealing cover 220 and the lower mounting seat 210 can be effectively prevented, thereby improving the connection effect, and ensuring the stability and reliability of the connection between the sealing cover 220, the auxiliary air chamber assembly 400, and the lower mounting seat 210.

In some embodiments, the sealing members may have other arrangements. For example, the first sealing member 2221 may be disposed between a connecting wall 450 of the auxiliary air chamber assembly 400 and the first step surface 2222, the second sealing member 2231 may be disposed between the auxiliary air chamber assembly 400 and the second step surface 2232, and the third sealing member 2241 may be disposed between the third step surface 2242 and the pressing portion 231 of the upper mounting seat 230.

Referring further to FIG. 6, FIG. 7 and FIG. 10, the upper mounting seat 230 is disposed around outer sides of the lower mounting seat 210 and the sealing cover 220 and is located above the mounting plate 240 to fix the sealing cover 220 to the lower mounting seat 210. Threads are provided on an inner side of the upper mounting seat 230 and an outer side of the upper connecting portion 212 correspondingly to each other, and the upper mounting seat 230 is disposed around and fixed to the lower mounting seat 210 through the threads.

The upper mounting seat 230 includes the pressing portion 231, a connecting portion 232, and a plurality of reinforcing ribs 233. The pressing portion 231 and the connecting portion 232 are both provided in an annular shape. The pressing portion 231 is located above the lower mounting seat 210 and the sealing cover 220. A positioning jackscrew 2311 passes through the pressing portion 231 from top to bottom and is inserted into the upper connecting portion 212 to further fix the upper mounting seat 230 to the lower mounting seat 210. Meanwhile, a bottom of the pressing portion 231 is pressed against the sealing cover 220 to compress the sealing cover 220 within the lower mounting seat 210.

The connecting portion 232 is disposed on the periphery of the pressing portion 231 and is in sliding fit with the upper bearing component 250. A height of the connecting portion 232 is lower than that of the pressing portion 231. An outer side of the connecting portion 232 is bent downwardly to form an outer stop portion 2321 for limiting the upper bearing component 250. The plurality of reinforcing ribs 233 are disposed on an upper surface of the connecting portion 232 and extend radially, and are gradually inclined downwardly from the inside to the outside, such that the structural strength of the upper mounting seat 230 is improved.

An internal thread is provided on one end of the connecting portion 232, and the outer stop portion 2321 is disposed at a side of the other end of the connecting portion 232. An external thread is provided on an upper end of an outer wall of the main mounting ring 215, and is matched with the internal thread. The internal thread on the connecting portion 232 is matched with the external thread on the main mounting ring 215, enabling threaded connection between the connecting portion 232 and the main mounting ring 215, thereby enabling threaded connection between the upper mounting seat 230 and the lower mounting seat 210.

With the threaded connection between the upper mounting seat 230 and the lower mounting seat 210, when the upper bearing component 250 or the lower bearing component 260 in a mounting groove 270 produces wear on the upper mounting seat 230 or the lower mounting seat 210 such that the clearance in the mounting groove 270 increases, the clearance can be adjusted by adjusting the position of the threaded connection between the upper mounting seat 230 and the lower mounting seat 210, such that the mounting plate 240 does not vibrate within the mounting groove 270, thereby reducing the occurrence of abnormal noise.

Further, the upper mounting seat 230 is provided with a plurality of through holes 234, the lower mounting seat 210 is provided with a plurality of positioning holes 214, and the positioning jackscrew 2311 passes through the through hole 234 and then is inserted into the positioning hole 214 for rotational positioning between the upper mounting seat 230 and the lower mounting seat 210.

In this embodiment, the upper mounting seat 230 has a plurality of through holes 234, and the lower mounting seat 210 has a plurality of positioning holes 214. After the upper mounting seat 230 and the lower mounting seat 210 are rotated into place through the threaded connection, the through holes 234 correspond to the positioning holes 214. The positioning jackscrew 2311 is inserted into the positioning hole 214 through the corresponding through hole 234, to limit the relative rotation between the upper mounting seat 230 and the lower mounting seat 210, thereby preventing the threaded connection between the upper mounting seat 230 and the lower mounting seat 210 from being loosened.

In this embodiment, the through hole 234 may be a straight hole or a threaded hole. Alternatively, the positioning hole 214 may be provided with an internal thread matched with the positioning jackscrew 2311.

**In** an optional embodiment, a circle formed by centers of all the positioning holes 214 and a circle formed by centers of all the through holes 234 are concentric circles, and have a same radius. An angle formed by centers of adjacent two of the through holes 234 to a center of the concentric circles is $\alpha$ as shown in FIG. 7, and an angle formed by centers of adjacent two of the positioning holes 214 to the center of the concentric circles is $\beta$ as shown in FIG. 9, where a relationship between $\alpha$ and $\beta$ is:

$$\alpha \neq \beta.$$

Due to the threaded connection between the upper mounting seat 230 and the lower mounting seat 210, the relative position between the upper mounting seat 230 and the lower mounting seat 210 needs to be adjusted to reduce the clearance after the wear on the upper mounting seat 230 and the lower mounting seat 210 produced by the upper bearing component 250 or the lower bearing component 260. Therefore, the fixed position between the upper mounting seat 230 and the lower mounting seat 210 after the relative rotation is not unchanged.

In order to ensure that the positioning jackscrew 2311 can pass through the through hole 234 and be inserted into the positioning hole 214 to enable the rotation limit between the upper mounting seat 230 and the lower mounting seat 210, in this embodiment, the angle $\alpha$ is set to be different from the angle $\beta$, as shown in FIG. 7 and FIG. 9. In this way, after the upper mounting seat 230 rotates relative to the lower mounting seat 210, any through hole 234 can correspond to any positioning hole 214 at any position, at which time the positioning jackscrew 2311 is inserted into the corresponding through hole 234 and positioning hole 214.

In other words, as long as one of the through holes 234 corresponds to a positioning hole 214 for a positioning jackscrews 2311 to be inserted into, the rotational positioning between the upper mounting seat 230 and the lower mounting seat 210 can be enabled.

The mounting plate 240 is mounted between the upper mounting seat 230 and the lower mounting seat 210 and is rotatably connected to the upper mounting seat 230 and the lower mounting seat 210. In particular, the mounting groove 270 is formed externally between the upper mounting seat 230 and the lower mounting seat 210, and an end of the mounting plate 240 is disposed in the mounting groove 270. The mounting groove 270 includes a first annular groove 247 and a second annular groove 248. The main mounting ring 215, the lower stop portion 211, the connecting portion 232, and the outer stop portion 2321 together define the mounting groove 270. The mounting plate 240 passes between the outer stop portion 2321 and the lower stop portion 211 and is inserted into the mounting groove 270.

The upper bearing component 250 is disposed between the upper mounting seat 230 and the mounting plate 240, and the first annular groove 247 is formed between the mounting plate 240 and the connecting portion 232 for accommodating the upper bearing component 250. The lower bearing component 260 is disposed between the mounting plate 240 and the lower mounting seat 210, and the second annular groove 248 is formed between the mounting plate 240 and the lower stop portion 211 for accommodating the lower bearing component 260.

In particular, a height of a top of the mounting plate 240 is lower than that of a top of the lower mounting seat 210. The mounting plate 240 includes a clamping portion 241, a bending portion 242, a first limiting portion 243, a second limiting portion 244, and a protruding portion 245. The clamping portion 241 is disposed between the upper bearing component 250 and the lower bearing component 260. The first annular groove 247 is disposed above the clamping portion 241, and the second annular groove 248 is disposed below the clamping portion 241.

The bending portion 242 extends upwardly from an inner side of the clamping portion 241. The first limiting portion 243 extends upwardly from an outer side of the clamping portion 241. The first limiting portion 243 is disposed corresponding to the outer stop portion 2321, and the first limiting portion 243 and the outer stop portion 2321 together limit the upper bearing component 250. The connecting portion 232 is disposed opposite to the clamping portion 241. In this way, the clamping portion 241, the bending portion 242, the first limiting portion 243, the connecting portion 232, and the outer stop portion 2321 together define the first annular groove 247. The second limiting portion 244 extends downwardly from the outer side of the clamping portion 241. The lower stop portion 211 is disposed opposite to the clamping portion 241. In this way, the clamping portion 241, the second limiting portion 244, and the lower stop portion 211 together define the second annular groove 248.

The protruding portion 245 is disposed on the periphery of the clamping portion 241, and is provided with a plurality of second fasteners 246 for connection with the vehicle body. The protruding portion 245 radially extends outwardly to form a plurality of lugs 2451. The second fasteners 246 pass through the lugs 2451.

It can be understood that, in an extension direction of the longitudinal axis 500, the mounting plate 240 is located in the middle of the mounting component 200, an upper portion of the mounting plate 240 is compressed by the upper bearing component 250, the upper mounting seat 230 and other components, and a lower portion of the mounting plate 240 is supported by the lower bearing component 260, the lower stop portion 211 and other components. In this way, when the mounting plate 240 is connected to the vehicle body, external forces can be better absorbed and dispersed, such that the stability of connection between the entire MacPherson air spring and the vehicle body can be improved, and the separation of the air spring from the vehicle body caused by excessive intensity of movement of the vehicle body can be avoided.

The upper bearing component 250 is disposed between the upper mounting seat 230 and the mounting plate 240 and transmits axial and rotational forces therebetween. The upper bearing component 250 includes a first race 251 fixed to the upper mounting seat 230, a second race 252 fixed to the mounting plate 240, and a first sliding ring 253 disposed between the first race 251 and the second race 252. In particular, the first race 251 is fixed relative to the connecting portion 232, and the second race 252 is fixed relative to the clamping portion 241. The first race 251 and the second race 252 are rotatable relative to each other about the longitudinal axis 500 through the first sliding ring 253. The upper mounting seat 230 and the mounting plate 240 are rotatable relative to each other about the longitudinal axis 500 through the upper bearing component 250.

Further, the upper bearing component 250 further includes a first bumper member 254 disposed between the second race 252 and the mounting plate 240. A side of the first buffer member 254 close to the second race 252 is attached to the second race 252. A protrusion is provided on a side of the first buffer member 254 close to the mounting plate 240 and abuts against the mounting plate 240. The first buffer member 254 may be configured as an elastic structure to absorb noise or vibration from the upper mounting seat 230 and the mounting plate 240, to improve the NVH performance, and to make the connection of the upper bearing component 250 more stable.

The lower bearing component 260 is disposed between the mounting plate 240 and the lower mounting seat 210 and transmits axial, radial, and rotational forces therebetween. The lower bearing component 260 includes a third race 261 fixed to the mounting plate 240, a fourth race 262 fixed to the lower mounting seat 210, and a second sliding ring 263 disposed between the third race 261 and the fourth race 262. In particular, the third race 261 is fixed relative to the clamping portion 241, and the fourth race 262 is fixed relative to the lower stop portion 211. The third race 261 and the fourth race 262 are rotatable relative to each other about the longitudinal axis 500 through the second sliding ring 263. The mounting plate 240 and the lower mounting seat 210 are rotatable relative to each other about the longitudinal axis 500 through the lower bearing component 260.

When force is applied to the MacPherson air spring strut assembly, forces from the suspension are transferred to the lower mounting seat 210 via the damper rod component 300 and the spring body 100. The lower stop portion 211 receives force from the upper seat 120 and moves upwardly against the lower bearing component 260. Therefore, the MacPherson air spring strut assembly according to the present application puts forward higher requirements on the stiffness, sliding smoothness, force transfer path, and the like of the lower bearing component 260. In this embodiment, the third race 261 and the fourth race 262 each have an L-shaped longitudinal cross-section, with a radially extending portion disposed between the lower stop portion 211 and the clamping portion 241, and a longitudinally extending portion disposed between the upper connecting portion 212 and the bending portion 242, and the second sliding ring 263 is disposed radially. In this way, force transfer between the lower mounting seat 210 and the mounting plate 240 is possible in both the longitudinal and transverse directions, enabling more stable relative rotation between the lower mounting seat 210 and the mounting plate 240.

Further, the lower bearing component 260 further includes a second buffer member 264 disposed between the mounting plate 240 and the third race 261, and an upper side and a lower side of the second buffer member 264 are respectively attached to the mounting plate 240 and the third race 261. The second buffer member 264 may be configured as an elastic structure to absorb noise or vibration from the mounting plate 240 and the lower mounting seat 210, to improve the NVH performance, and to make the connection of the lower bearing component 260 more stable.

**The** upper bearing component 250 and the lower bearing component 260 are configured such that the mounting plate 240 is rotatable relative to the upper mounting seat 230 and the lower mounting seat 210 about the longitudinal axis 500. Since the upper mounting seat 230, the lower mounting seat 210, and the sealing cover 220 are fixed to each other, the mounting plate 240 is rotatable relative to the sealing cover 220 about the longitudinal axis 500. The upper bearing component 250 and the lower bearing component 260 are both plane bearings, which can effectively reduce the torsional force during movement of the MacPherson air spring assembly, and increase the rotation angle to $\pm45°$, and can be operated stably within the first annular groove 247 and the second annular groove 248 without being separated outwardly from the first annular groove 247 and the second annular groove 248. Both the upper bearing component 250 and the lower bearing component 260 are pre-compressed to create a certain pre-loading force.

The damper rod component 300 is disposed below the spring body 100 and partially extends into the spring body 100. The damper rod component 300 includes a piston rod 310, the oil storage cylinder 320, the rubber bushing 330, a buffer block 340, and a damper sealing cover 350.

The piston rod 310 and the oil storage cylinder 320 extend into the main air chamber 110 from the receiving hole 131. The rubber bushing 330 is pressed into an inner cavity of the lower mounting seat 210 in an interference manner, and is fixed to an upper end of the piston rod 310 through a fourth fastener 311. The upper end of the piston rod 310 is fixed inside the lower mounting seat 210 through the rubber bushing 330. During the movement of the vehicle, the damper rod component 300 swings through the deformation of the rubber bushing 330. An upper portion of the rubber bushing 330 abuts against the sealing cover 220 through an abutting portion 225, thereby avoiding excessive deformation of the rubber bushing 330.

The oil storage cylinder 320 is wrapped around a lower portion of the piston rod 310 and is connected to the lower seat 130. The oil storage cylinder 320 at least partially defines a damping chamber containing an amount of damping fluid. An annular groove is provided in a lower portion of the lower seat 130, and a fifth sealing member 312 and a sealing gasket 313 are placed in the annular groove to enable sealing connection between the lower seat 130 and the oil storage cylinder 320, such that the main air chamber 110 is isolated from the outside. The fifth sealing member 312 is substantially a static seal. Meanwhile, a limiting device is disposed between the lower seat 130 and the oil storage cylinder 320 to limit the relative rotation between the lower seat 130 and the oil storage cylinder 320, such that the lower seat 130 is fixed relative to the oil storage cylinder 320.

The buffer block 340 is pressed into a lower portion of the lower mounting seat 210 in an interference manner, so as to realize buffering and limiting during bouncing of the vehicle. The damper sealing cover 350 is pressed onto the oil storage cylinder 320 in an interference manner.

The auxiliary air chamber assembly 400 includes the inner wall 420, an outer wall 430, the supporting wall 440, the connecting wall 450, and a solenoid valve 460 inside the auxiliary air chamber assembly 400. The sealed auxiliary air chamber 410 is defined between the inner wall 420 and the outer wall 430. The supporting wall 440 is disposed on a lower end of the auxiliary air chamber assembly 400 and protrudes from the auxiliary air chamber 410. The connecting wall 450 is radially disposed to connect the annular inner wall 420. An inner side of the inner wall 420 defines an accommodating space 421. The accommodating space 421 is disposed above the connecting wall 450, and the first step surface 2222 is disposed below the connecting wall 450.

The solenoid valve 460 is disposed within the accommodating space 421 to control connection and disconnection between the main air chamber 110 and the auxiliary air chamber 410. When the main air chamber 110 is disconnected from the auxiliary air chamber 410, the MacPherson air spring strut assembly is provided with a single chamber, at which time only the main air chamber 110 is used to realize the stiffness adjustment and the damping effect of the air spring. When the main air chamber 110 is communicated with the auxiliary air chamber 410, the MacPherson air spring strut assembly is provided with double chambers, at which time the main air chamber 110 and the auxiliary air chamber 410 work together to improve the damping effect through a larger air chamber space. By providing the auxiliary air chamber assembly 400, the MacPherson air spring strut assembly with a double-chamber arrangement is realized, and the two-stage variable stiffness of the air spring is further realized, which improves the flexibility and comfort of the MacPherson air spring strut assembly.

The shape of the auxiliary air chamber assembly 400 is not limited, and can be flexibly designed according to actual needs. In this embodiment, each of the walls of the auxiliary air chamber assembly 400 and the cavity formed therein are circumferentially symmetrically disposed about the longitudinal axis 500. The inner wall 420 and the outer wall 430 are both cylindrical and coaxial, and the accommodating space 421 is a columnar space. By providing the circumferentially symmetrical auxiliary air chamber assembly 400, the balance of air pressure and the balance of load distribution can be realized, such that the force distribution on the MacPherson air spring strut assembly is more balanced, which further improves the comfort and stability, and avoids the deformation or imbalance caused by uneven load distribution. The whole auxiliary air chamber assembly 400 is made of plastic material, which has no effects on the performance of the MacPherson air spring strut assembly while reducing the weight of the whole vehicle.

The auxiliary air chamber assembly 400 is fixed to the sealing cover 220. The sealing cover 220 and the auxiliary air chamber assembly 400 can be fixed to each other through snap-fit connection, or a fastener. In this embodiment, the sealing cover 220 and the auxiliary air chamber assembly 400 are fixed to each other through a mounting bolt 2224. The mounting bolt 2224 passes through the connecting wall 450 and the first step surface 2222 from top to bottom and is inserted into the first sealing portion 222, so as to fix the auxiliary air chamber assembly 400 to the sealing cover 220.

A plurality of first vent holes 470 are provided on a side of the auxiliary air chamber 410 close to the sealing cover 220. A plurality of second vent holes 2234 are provided on a side of the communicating cavity 221 close to the auxiliary air chamber assembly 400, and are in communication with the first vent holes 470. Both the first vent holes 470 and the second vent holes 2234 are evenly distributed circumferentially about the longitudinal axis 500.

Further, a sealed annular transition cavity 480 is formed between the sealing cover 220 and the auxiliary air chamber assembly 400, and is communicated with the first vent holes 470 and the second vent holes 2234. The transition cavity 480 provides a buffer space for air exchange between the first vent holes 470 and the second vent holes 2234. During the actual assembly, the first vent holes 470 and the second vent holes 2234 do not need to be precisely aligned to achieve efficient air circulation, which expands the design space and improves the assembly efficiency.

In particular, an outer end of the second step surface 2232 protrudes upwardly to form a limiting block 2235. The limiting block 2235 abuts against the auxiliary air chamber assembly 400, creating a longitudinal gap between the second step surface 2232 and the auxiliary air chamber assembly 400. The second step surface 2232, the limiting block 2235, the first sealing surface 2223, and the auxiliary air chamber assembly 400 together define the transition cavity 480.

The air channel in this embodiment is formed by the first vent holes 470, the second vent holes 2234, and the transition cavity 480 together. It can be understood that this embodiment only provides an arrangement of the air channel, and in other embodiments, those skilled in the art can provide other designs for the specific structure of the air channel according to actual needs, as long as the communication between the main air chamber 110 and the auxiliary air chamber 410 can be satisfied.

A bottom of the auxiliary air chamber assembly 400 is disposed close to a top of the upper mounting seat 230, such that the overall structure of the MacPherson air spring strut assembly is more compact, which saves the space and reduces the cost, while improving the response speed and the energy transfer efficiency of the air spring, enabling the stiffness adjustment of the air spring to be more flexible and efficient, and the stability of the air spring to be higher.

Compared to the first embodiment, the MacPherson air spring strut assembly according to the second embodiment only has a different design in the structure of the sealing cover 220', and eliminates the auxiliary air chamber assembly 400. Therefore, only the sealing cover 220' is described herein, and other portions will not be repeated.

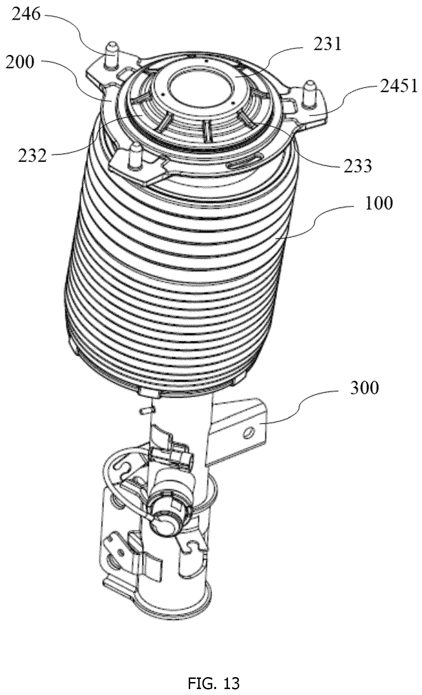

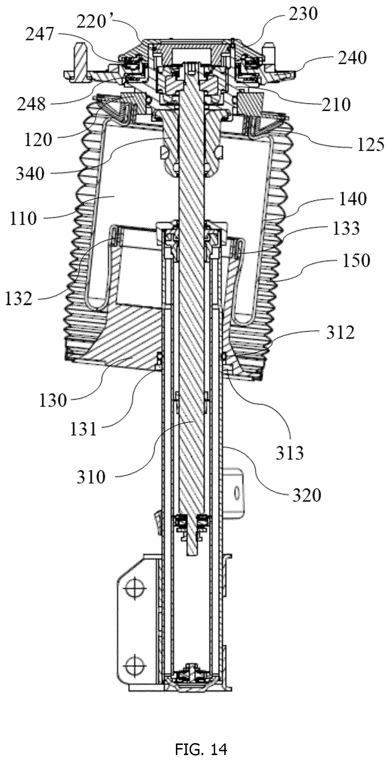

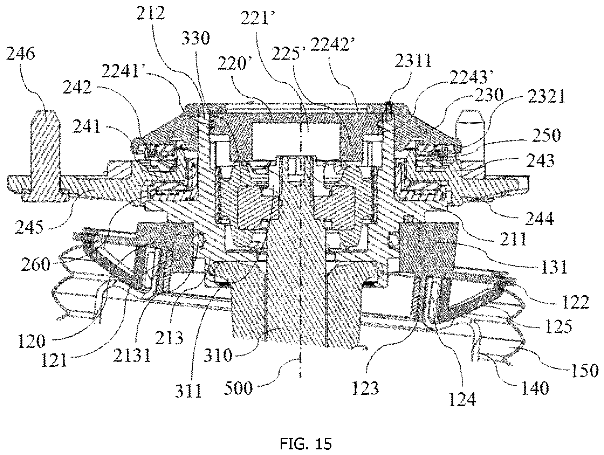

As shown in FIG. 13, FIG. 14, and FIG. 15, the sealing cover 220' is disposed inside the lower mounting seat 210 and cooperates with the upper mounting seat 230 to seal an upper end of the MacPherson air spring strut assembly. A communicating cavity 221' is defined in the sealing cover 220', and is communicated with the main air chamber 110.

A third sealing member 2241' is disposed between the sealing cover 220' and the lower mounting seat 210. In particular, in this embodiment, the sealing cover 220' includes a third step surface 2242' disposed transversely and a third sealing surface 2243' extending downwardly from the third step surface 2242'. A height of the third step surface 2242' is not higher than that of a top of the lower mounting seat 210. In this way, when the upper mounting seat 230 is fixed to the lower mounting seat 210, the upper mounting seat 230 can also be pressed against the third step surface 2242' to limit the sealing cover 220' and to press and fix the sealing cover 220' onto the lower mounting seat 210. The third sealing surface 2243' is attached to the upper connecting portion 212, and the third sealing member 2241' is disposed between the third sealing surface 2243' and the upper connecting portion 212. The third sealing member 2241' is substantially a static seal.

Further, a longitudinally extending abutting portion 225' is provided on a bottom of the sealing cover 220' and abuts against the damper rod component 300 to limit the longitudinal movement of the damper rod component 300. A limiting member (not shown) is disposed between the lower mounting seat 210 and the sealing cover 220', to limit the relative rotation between the lower mounting seat 210 and the sealing cover 220'.

The present application further provides a vehicle including the MacPherson air spring strut assembly as described above.

The MacPherson air spring strut assembly and the vehicle according to the present application are provided with the auxiliary air chamber assembly 400, where the auxiliary air chamber 410 in the auxiliary air chamber assembly 400 can be communicated with the main air chamber 110 in the spring body 100, such that the total volume of the air chamber in the MacPherson air spring is changed, and thus the stiffness of the MacPherson air spring strut assembly can be adjusted, which improves the stability and comfort of the MacPherson air spring strut assembly in different application scenarios.

Meanwhile, the mounting component 200 is disposed above the spring body 100, and the auxiliary air chamber assembly 400 is disposed above the mounting component 200, such that the auxiliary air chamber assembly 400 has no effects on the connection, sealing and movement relationship between the spring body 100 and the mounting component 200, and the overall structure of the MacPherson air spring strut assembly is more compact and smooth. During the assembly, only the auxiliary air chamber assembly 400 and the sealing cover 220 need to be sealed and connected to each other, which greatly simplifies the assembly process of the auxiliary air chamber assembly 400 and improves the manufacturing efficiency.

For example, in the case of the first embodiment, the MacPherson air spring strut assembly in the present application includes the first sealing member 2221, the second sealing member 2231, the third sealing member 2241, the fourth sealing member 2131, and the fifth sealing member 312 from top to bottom, enabling sealing between the auxiliary air chamber assembly 400 and the mounting component 200, the sealing cover 220' in the mounting component 200 and the lower mounting seat 210, the mounting component 200 and the spring body 100, and the spring body 100 and the damper rod component 300, such that the main air chamber 110 and the auxiliary air chamber 410 can be effectively isolated from the outside. The five sealing members are all O-shaped sealing rings with strong sealing performance, and are all static seals, which improve the sealing reliability, while increasing the service life of the sealing members and reducing the requirements for the use of the sealing members.

In addition, in the MacPherson air spring strut assembly and the vehicle according to the present application, the mounting component 200 is provided to connect the spring body 100 with the damper rod component 300, and the upper bearing component 250 and the lower bearing component 260 are respectively provided on the upper and lower sides of the mounting plate 240, enabling the relative rotation between the mounting plate 240 and the upper mounting seat 230 and between the mounting plate 240 and the lower mounting seat 210, such that the MacPherson air spring strut assembly can rotate relative to the vehicle body when the vehicle turns. The MacPherson air spring strut assembly according to the present application is simple in relative rotation structure and reliable in connection. Meanwhile, since the mounting plate 240 does not have a direct connection with the main air chamber 110 in the spring body 100, there is no need to consider air tightness of the mounting plate 240 during rotation, which effectively reduces the difficulty in design and manufacturing.

The foregoing merely illustrates preferred embodiments of the present application, and is not intended to limit the present application in any form. Although the present application has been disclosed in the preferred embodiments as above, it is not intended to limit the present application. Any person skilled in the art may, without departing from the scope of the technical solutions of the present application, make some variations or modifications into equivalent embodiments with equivalent changes based on the technical contents disclosed as above. Any simple variations, equivalent changes and modifications made to the above embodiments according to the technical essence of the present application without departing from the contents of the technical solutions of the present application still fall within the scope of the technical solutions of the present application.

## Claims

1. A MacPherson air spring strut assembly, **characterized by** comprising a spring body, a mounting component, and a damper rod component, wherein the mounting component comprises a rotating component and a mounting plate disposed around the rotating component, the mounting plate is fixedly connected to a vehicle body, and the spring body, the damper rod component, and the rotating component are rotatable relative to the mounting plate.

2. The MacPherson air spring strut assembly according to claim 1, wherein the rotating component comprises a lower mounting seat and an upper mounting seat, the upper mounting seat being disposed on an outer side of the lower mounting seat and being in threaded connection with the lower mounting seat.

3. The MacPherson air spring strut assembly according to claim 2, wherein the upper mounting seat is provided with a plurality of through holes, the lower mounting seat is provided with a plurality of positioning holes, and a positioning jackscrew passes through one of the through holes and is inserted into a corresponding positioning hole for rotational positioning between the upper mounting seat and the lower mounting seat.

4. The MacPherson air spring strut assembly according to claim 3, wherein a circle formed by centers of all the positioning holes and a circle formed by centers of all the through holes are concentric circles, and have a same radius; and
   an angle formed by centers of adjacent two of the through holes to a center of the concentric circles is α, and an angle formed by centers of adjacent two of the positioning holes to the center of the concentric circles is β, wherein a relationship between α and β is:

$$\alpha \neq \beta.$$

5. The MacPherson air spring strut assembly according to claim 2, wherein the upper mounting seat is disposed above the mounting plate, an upper bearing component is disposed between the upper mounting seat and the mounting plate, and a lower bearing component is disposed between the lower mounting seat and the mounting plate.

6. The MacPherson air spring strut assembly according to claim 5, wherein the lower bearing component comprises a third race fixed to the mounting plate, a fourth race fixed to the lower mounting seat, and a second sliding ring disposed between the third race and the fourth race,
   wherein the third race and the fourth race have L-shape longitudinal cross-sections, and the second sliding ring is disposed radially.

7. The MacPherson air spring strut assembly according to claim 5, wherein the lower mounting seat comprises a lower stop portion protruding outward radially, an upper seat is disposed on an upper portion of the spring body, an upper end of the lower stop portion is in sliding fit with the lower bearing component, and a lower end of the lower stop portion abuts against the upper seat.

8. The MacPherson air spring strut assembly according to claim 5, wherein the rotating component further comprises a sealing cover, the sealing cover being fixed to the lower mounting seat through the upper mounting seat.

9. The MacPherson air spring strut assembly according to claim 8, wherein

   a third sealing member is disposed between the sealing cover and the lower mounting seat;
   the upper mounting seat comprises an annular pressing portion disposed above the lower mounting seat and the sealing cover, and a connecting portion with a height lower than that of the pressing portion; and
   the connecting portion is in sliding fit with the upper bearing component.

10. The MacPherson air spring strut assembly according to claim 9, wherein the upper mounting seat further comprises an outer stop portion, an internal thread is provided on one end of the connecting portion, and the outer stop portion is disposed on a side of the other end of the connecting portion;

    the lower mounting seat comprises a main mounting ring and a lower stop portion, an external thread is provided on an upper end of an outer wall of the main mounting ring and is matched with the internal thread, a lower end of the main mounting ring is connected to an air spring component, and the lower stop portion is disposed on an outer wall in the middle of the main mounting ring; and
    the main mounting ring, the lower stop portion, the connecting portion, and the outer stop portion together define a mounting groove, and the mounting plate passes between the lower stop portion and the outer stop portion and is inserted into the mounting groove.

11. The MacPherson air spring strut assembly according to claim 9, wherein the upper mounting seat further comprises a reinforcing rib, one end of the reinforcing rib being connected to an outer side of the pressing portion, and the other end of the reinforcing rib being connected to an outer side of the connecting portion.

12. The MacPherson air spring strut assembly according to claim 8, wherein

    the damper rod component comprises a piston rod, an upper end of the piston rod being fixed inside the lower mounting seat through a rubber bushing; and
an abutting portion is provided on a bottom of the sealing cover and extends longitudinally, the abutting portion abutting against the rubber bushing.

13. The MacPherson air spring strut assembly according to claim 2, wherein

the mounting plate is mounted between the upper mounting seat and the lower mounting seat, and the upper mounting seat and the lower mounting seat are rotatable relative to the mounting plate; and
a height of a top end of the mounting plate is lower than that of a top end of the lower mounting seat.

14. The MacPherson air spring strut assembly according to claim 2, wherein the spring body comprises a lower seat connected to the damper rod component, the lower seat being disposed at an angle with respect to the damper rod component.

15. The MacPherson air spring strut assembly according to claim 2, wherein

the spring body comprises an upper seat, a sleeve, and a dust shield outside of the sleeve, wherein the upper seat comprises a support body and an end plate extending outward radially from the support body; and
a fourth sealing member is disposed between the support body and the lower mounting seat, and the end plate is connected to the dust shield.

16. The MacPherson air spring strut assembly according to claim 2, further comprising an auxiliary air chamber assembly fixed to an upper portion of the mounting component and communicated with the spring body through the mounting component; and
the mounting component is in sealed connection with both the spring body and the auxiliary air chamber assembly.

17. The MacPherson air spring strut assembly according to claim 16, wherein a main air chamber is formed inside the spring body, an auxiliary air chamber is formed inside the auxiliary air chamber assembly, and the main air chamber can be communicated with the auxiliary air chamber.

18. The MacPherson air spring strut assembly according to claim 17, wherein

the mounting component further comprises a sealing cover fixed to the auxiliary air chamber assembly, and an air channel is formed between the sealing cover and the auxiliary air chamber assembly; and
the sealing cover is fixed to the auxiliary air chamber assembly through snap-fit connection or a mounting bolt.

19. The MacPherson air spring strut assembly according to claim 18, wherein a first sealing member and a second sealing member are disposed between the sealing cover and the auxiliary air chamber assembly, and the first sealing member and the second sealing member are located on both sides of the air channel, respectively.

20. The MacPherson air spring strut assembly according to claim 18, wherein

a communicating cavity is formed in the sealing cover and is communicated with the spring body; and
a plurality of first vent holes are provided on a side of the auxiliary air chamber close to the sealing cover, a plurality of second vent holes are provided on a side of the communicating cavity close to the auxiliary air chamber assembly, and the second vent holes are communicated with the first vent holes.

21. The MacPherson air spring strut assembly according to claim 20, wherein

an annular transition cavity is formed between the sealing cover and the auxiliary air chamber assembly, and is communicated with the first vent holes and the second vent holes; and
the sealing cover comprises a first sealing portion and a second sealing portion extending from top to bottom, a side surface of the first sealing portion forms a first sealing surface, a top surface of the second sealing portion forms a second step surface, and the first sealing surface, the second step surface and the auxiliary air chamber assembly together define the transition cavity.

22. The MacPherson air spring strut assembly according to claim 18, wherein

the sealing cover comprises a third sealing portion extending into the lower mounting seat, and a third sealing member is disposed between the third sealing portion and the lower mounting seat;
a bottom of the auxiliary air chamber assembly is disposed close to a top of the upper mounting seat;
the upper mounting seat is pressed against the third sealing portion; and

a limiting member is disposed between the lower mounting seat and the sealing cover, to limit a relative rotation between the lower mounting seat and the sealing cover.

23. The MacPherson air spring strut assembly according to claim 17, further comprising a solenoid valve, wherein the solenoid valve is disposed inside the auxiliary air chamber assembly to control connection and disconnection between the main air chamber and the auxiliary air chamber.

24. The MacPherson air spring strut assembly according to claim 1, wherein a central axis of the mounting component coincides with a central axis of the damper rod component, and a central axis of the spring body is disposed at an angle with respect to the central axis of the damper rod component.

25. A vehicle, comprising the MacPherson air spring strut assembly according to any one of claims 1 to 24.

FIG. 1

FIG. 2

FIG. 3

FIG. 4

FIG. 5

FIG. 6

FIG. 7

FIG. 8

210

214

β

215

211

FIG. 9

230

270

210

FIG. 10

310

350

132

320

133

140

130

FIG. 11

140

310

130

312

313

150

FIG. 12

FIG. 13

FIG. 14

FIG. 15

## INTERNATIONAL SEARCH REPORT

| | |
|---|---|
| | International application No. |
| | **PCT/CN2024/112771** |

| | |
|---|---|
| **A.** | **CLASSIFICATION OF SUBJECT MATTER** |

B60G 11/28(2006.01)i; B60G 11/27(2006.01)i; B60G 15/08(2006.01)i

According to International Patent Classification (IPC) or to both national classification and IPC

| | |
|---|---|
| **B.** | **FIELDS SEARCHED** |

Minimum documentation searched (classification system followed by classification symbols)

IPC: B06G; F16F

Documentation searched other than minimum documentation to the extent that such documents are included in the fields searched

Electronic data base consulted during the international search (name of data base and, where practicable, search terms used)

CNTXT, ENTXT, VEN, CJFD: 车, 支柱, 悬挂, 悬架, 减振, 减震, 阻尼, 空气弹簧, 气体弹簧, 安装, 倾斜, 偏转, vehicle, car, strut, suspension, vibration, damp+, shock, air spring, mount+, incline, tilt+, eccentric

| | |
|---|---|
| **C.** | **DOCUMENTS CONSIDERED TO BE RELEVANT** |

| Category* | Citation of document, with indication, where appropriate, of the relevant passages | Relevant to claim No. |
|---|---|---|
| X | CN 110017345 A (QINGKE INTELLIGENT SUSPENSION SYSTEM (SUZHOU) CO., LTD.) 16 July 2019 (2019-07-16) description, paragraphs [0023]-[0048], and figures 1 and 2 | 1, 2, 25 |
| Y | CN 110017345 A (QINGKE INTELLIGENT SUSPENSION SYSTEM (SUZHOU) CO., LTD.) 16 July 2019 (2019-07-16) description, paragraphs [0023]-[0048], and figures 1 and 2 | 24 |
| Y | CN 205417069 U (QINGDAO HAOFUMING VEHICLE TECHNOLOGY CO., LTD.) 03 August 2016 (2016-08-03) description, paragraphs [0011]-[0015], and figure 1 | 24 |
| A | CN 1826240 A (ARVINMERITOR TECHNOLOGY, LLC) 30 August 2006 (2006-08-30) entire document | 1-25 |
| A | CN 209705139 U (ZHEJIANG GEELY HOLDING GROUP CO., LTD. et al.) 29 November 2019 (2019-11-29) entire document | 1-25 |
| A | KR 20050093102 A (HYUNDAI MOBIS CO., LTD.) 23 September 2005 (2005-09-23) entire document | 1-25 |

| | |
|---|---|
| ☐ Further documents are listed in the continuation of Box C. | ☑ See patent family annex. |

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| | |
|---|---|
| Date of the actual completion of the international search | Date of mailing of the international search report |
| **28 November 2024** | **03 December 2024** |

| | |
|---|---|
| Name and mailing address of the ISA/CN | Authorized officer |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/112771**

| Patent document cited in search report | | | Publication date (day/month/year) | Patent family member(s) | | | Publication date (day/month/year) |
|---|---|---|---|---|---|---|---|
| CN | 110017345 | A | 16 July 2019 | None | | | |
| CN | 205417069 | U | 03 August 2016 | None | | | |
| CN | 1826240 | A | 30 August 2006 | US | 2005029062 | A1 | 10 February 2005 |
| | | | | JP | 2007501729 | A | 01 February 2007 |
| | | | | EP | 1651455 | A1 | 03 May 2006 |
| | | | | WO | 2005016671 | A1 | 24 February 2005 |
| CN | 209705139 | U | 29 November 2019 | None | | | |
| KR | 20050093102 | A | 23 September 2005 | None | | | |

Form PCT/ISA/210 (patent family annex) (July 2022)